# EUROPEAN PATENT APPLICATION

(11) **EP 3 869 408 A1**
(43) Date of publication of application: **25.08.2021**
(21) Application number: 20290017.1
(22) Date of filing: 20.02.2020
(51) Int. Cl.: G06K 19/077

(54) **3D-PRINTED COMPONENTS WITH RFID CONNECTION DETECTION**

(71) Applicant: Hewlett-Packard Development Company, L.P., Spring, TX 77389 (US)
(72) Inventor: Sayers, Craig Peter, Palo Alto, California (US); Allen, William, Corvallis, Oregon (US); DE Marcillac, Patrick Jacques Andre Marie Dahey, 38053 Grenoble (FR); Ballagas, Rafael, Palo Alto, California (US)
(74) Representative: Bryers LLP

(57) **Abstract**

Systems and methods are described herein for detecting connections between components, such as 3D-printed components, using RFID tags, readers, and/or writers. For example, an RFID reader may read an identification code from an RFID tag that is at least partially 3D-printed as part of a first 3D-printed component to verify the connection to a second 3D-printed component. In various examples, the RFID reader may detect different identification codes depending on whether the first 3D-printed component is correctly connected to the second 3D-printed component, incorrectly connected to the second 3D-printed component, and/or connected to the second 3D-printed component in the past.

## Description

### BACKGROUND

Radio frequency identification (RFID) tags can be used to identify and track devices and objects. An RFID tag may, for example, include a radio transponder, a radio receiver, and a radio transmitter. An RFID reader may transmit an interrogation pulse to query an RFID tag. The RFID tag may use energy from the interrogation pulse to transmit a return pulse of digital data. The return pulse of digital data may, for example, include a unique identification number.

Passive RFID tags may be powered by the interrogation pulse from the RFID reader. Active tags may include an integrated power source, such as a battery, or draw power from an external power source. Variations and adaptations of RFID tags include low-frequency RFID tags, high-frequency RFID tags, and ultra-high frequency RFID tags. Near-field communication (NFC) devices are a variation and extension of RFID tag technology and are encompassed by the term RFID tag, as used herein.

### BRIEF DESCRIPTION OF THE DRAWINGS

Non-limiting and non-exhaustive examples of the disclosure are described, including various examples of the disclosure, with reference to the figures described below.
Figure 1A illustrates an example block diagram of a first component with an RFID tag to be connected to a second component with an RFID reader device.
Figure 1B illustrates an example block diagram of a first component with a first RFID tag portion to be connected to a second component with a second RFID tag portion and an integrated RFID reader device.
Figure 1C illustrates the example block diagram of Figure 1B with the first component correctly connected to the second component such that the first and second RFID tag portions combine to form a combined RFID tag.
Figure 1D illustrates the example block diagram of Figure 1B with the first component incorrectly connected to the second component such that the first and second RFID tag portions fail to form the combined RFID tag.
Figure 2 illustrates an example block diagram of a main component with an integrated RFID reader and multiple components that each include at least a portion of an RFID tag intended for connection with the main component.
Figure 3A illustrates an example block diagram of a first component with an integrated circuit RFID tag portion and a second component with an antenna RFID tag portion.
Figure 3B illustrates the block diagram of Figure 3A with the first and second components connected to form a combined RFID tag with an electrical connection between the integrated circuit RFID tag portion and the antenna RFID tag portion.
Figure 3C illustrates the block diagram of Figure 3A with the first and second components connected to form a combined RFID tag with a non-contact connection between the integrated circuit RFID tag portion and the antenna RFID tag portion.
Figure 4A illustrates a block diagram of a first component with a first RFID tag portion that, by itself, transmits a first identification code and a second component with a second RFID tag portion that, by itself, transmits a second identification code.
Figure 4B illustrates a block diagram of the first and second components connected such that the first and second RFID tag portions form a combined RFID tag that transmits a third identification code.
Figure 5A illustrates a block diagram of first and second components with first and second RFID tag portions and an RFID reader/writer.
Figure 5B illustrates the block diagram of Figure 5A with the RFID reader/writer reading a first identification code of the RFID tag portion of the first component in a disconnected state.
Figure 5C illustrates the block diagram of Figure 5A with the RFID reader/writer reading a second identification code of the RFID tag portion of the first component in a connected state.
Figure 5D illustrates the block diagram of Figure 5A with the RFID reader/writer writing assembly information to the RFID tag portion of the first component.
Figure 6 illustrates a flow chart of a method to detect that the first component is connected to the second component.

### DETAILED DESCRIPTION

In various examples of the systems and methods described herein, radio-frequency identification (RFID) tags are used to verify a connection between two 3D-printed components. For example, an assembly process may include an RFID reader to read an RFID tag to determine that a first 3D-printed component is connected to a second 3D-printed component. In some examples, the first 3D-printed component may include a first 3D-printed RFID tag portion, and the second 3D-printed component may include a second 3D-printed RFID tag portion. The first and second 3D-printed RFID tag portions may be configured such that when the first 3D-printed component is connected to the second 3D-printed component, the first and second 3D-printed RFID tag portions combine to form a combined RFID tag. An RFID reader and/or an associated 3D-printed antenna may be used to read the combined RFID tag to confirm or verify that the first 3D-printed component is connected to the second 3D-printed component.

In some examples, each of the first and second RFID tag portions may be inoperable prior to being combined to form the combined RFID tag. For example, the first RFID tag portion may be an integrated circuit component of an RFID tag (e.g., embedded or affixed to a 3D-printed component), and the second RFID tag portion may be a 3D-printed antenna portion of an RFID tag. Separately, neither of the first and second RFID tag portions may be operable to transmit identification information. However, once the first and second RFID tag portions are combined, a complete and functional RFID tag is formed (referred to as the "combined RFID tag"). In some instances, an integrated circuit RFID tag portion may be electrically connected to an antenna RFID tag portion or connected in a non-contact manner. For example, when a first 3D-printed part is connected to a second 3D-printed part, a 3D-printedantenna RFID portion of the first 3D-printed part may be placed in a non-contact communication state with an integrated circuit RFID portion of the second 3D-printed part.

In other examples, the first RFID tag portion may operate alone to transmit a first identification code that is readable by the RFID reader. The second RFID tag portion may also be able to transmit a second identification code by itself. When combined, the combined RFID tag may transmit a third identification code that is different than the first and second identification codes.

In still other examples, the first RFID tag portion may be configured to transmit an identification code by itself at a relatively low signal level. When combined with the first RFID portion, the combined RFID tag may transmit the same identification code but with a higher or stronger signal level.

As used herein, the terms "identification code" and "code" encompass any uniquely identifying digital or analog signal transmitted by an RFID tag that is readable by an RFID reader. In some examples, an integrated circuit of an RFID tag may respond to a query signal from an RFID reader with a digitally encoded signal identifying the RFID tag (e.g., a series of ones and zeros). In other examples, an integrated circuit of an RFID tag may cause the RFID tag to transmit a uniquely identifiable analog signal. In still other examples, an RFID tag may comprise electromagnetically responsive materials (e.g., a resonance-based RFID tag) that produce a unique resonance response to a query from an RFID reader. For instance, each RFID tag may comprise metal strips having unique resonance characteristics that are identifiable by an RFID reader. The lengths and/or widths of the metal strip(s) may vary between RFID tags rendering them uniquely identifiable. Combining the metal strips of two different RFID tags to form a combined RFID tag results in a new, unique resonance response that can be detected by the RFID reader. The identification code returned from a resonance-based RFID tag may include a spectrally identifiable electromagnetic signal with identifiable peaks and/or valleys at various frequencies.

In various examples, the combined RFID tag is formed when the first component and the second component are correctly connected. When the first and second components are connected incorrectly (e.g., misaligned, connected backwards, not connected at all, connected to the wrong location, etc.), the combined RFID tag is not formed. For instance, an integrated circuit RFID tag portion may not correctly connect to a 3D-printed antenna RFID tag portion if the first and second components are not correctly connected.

In some examples, a first 3D-printed component may include an RFID reader that detects other components that each include RFID tags as such other 3D-printed components are connected to the first 3D-printed component. For instance, a three-dimensional (3D) device may include a first 3D-printed part and a second 3D-printed part. The second 3D-printed part may include a radio-frequency identification (RFID) tag that is unreadable when the first 3D-printed part is disconnected from the second 3D-printed part and readable when the first 3D-printed part is connected to the second 3D-printed part. An RFID reader may be external to the 3D-device or integrated with the 3D-device. For example, an RFID reader or an antenna associated therewith may be printed as part of a 3D-printed component.

In some examples, a first component may be manufactured (e.g., 3D printed, injection molded, CNC machined, etc.) with a writable RFID tag. The system may detect the connection of a second 3D-printed component to the first component and cause an RFID writer device to write assembly information to the writable RFID tag of the first component. For example, the system may write assembly information to the writable RFID tag that indicates that the first and second components were once connected, identifies a date the first and second components were connected, specifies a location where the first and second components were connected, and/or identifies an entity (e.g., a user or machine) that connected the first and second components. An RFID reader may be used to detect that the first and second components are currently connected and/or read the assembly information to detect that the first and second components were once connected (or other assembly information).

In some examples, the writable RFID tag transmits a first identification code with the first component disconnected from the second component and a different identification code with the first component connected to the second component. Moreover, since the RFID writer writes assembly information to the writable RFID tag once the first component is connected to the second component, an RFID reader is able to scan the writable RFID tag and determine whether the first component is currently connected or disconnected from the second component and, if the first component is currently disconnected, whether the first component has ever been connected to the second component.

Many of the examples described herein are provided in the context of 3D-printing. However, it is appreciated that the principles of this disclosure can be applied to other manufacturing and assembly processes including, without limitation, CNC machining, polymer casing, rotational molding, vacuum forming, injection molding extrusion, and blow molding. Various pre-manufacturing, peri-manufacturing, and post-manufacturing assembly processes may be utilized in conjunction with the aforementioned manufacturing processes to integrate or affix RFID tags, RFID readers, and/or RFID writers to various components or parts of a system or assembly.

The examples of the disclosure may be further understood by reference to the drawings, wherein like parts are designated by like numerals throughout. It will be readily understood that the components of the disclosed examples, as generally described and illustrated in the figures herein, could be arranged and designed in a wide variety of different configurations. Thus, the following detailed description of the examples of the systems and methods of the disclosure is not intended to limit the scope of the disclosure, as claimed, but is merely representative of possible examples of the disclosure.

RFID tags may be embedded within 3D-printed parts or components. A system may monitor and record the assembly of a 3D-printed device. In some examples, a 3D-printed device may have an embedded RFID reader and/or writer to monitor and record its own assembly. In some examples, the 3D-printed device may have an integrated antenna or antennas to relay communication from RFID tags to an external RFID reader/writer. The system may store connection data to allow for a subsequent audit of the sequence of component assembly and/or indicate the current connection status of the various components of a system.

In some examples, a single antenna associated with an RFID reader may be used to monitor multiple connection points. The RFID reader may monitor the sequential connections of any number of components to one another and/or to a main or base component. In examples in which an RFID reader is integrated with or even embedded within a 3D-printed component, an integrated or embedded power source, such as a battery or a capacitor, may power the RFID reader. The system may detect RFID tags of a first component prior to the connection of the first component to a second component.

The system may record the number of attempts to connect the first component to the second component. In some examples, the system may detect an attempt to connect the first component to the second component based on, for example, a signal strength of a first identification code received from an RFID tag of the first component. The system may provide feedback to the user attempting to connect the first component to the second component. For example, the system may include an electronic indicator to provide visual, haptic, or audible feedback encouraging the user to complete the connection or indicating that the connection would be an error. For instance, the system may visually or audibly prompt the user to press a little harder or listen for a click.

Once the first component is connected to the second component, the RFID tag transmits a second (different) identification code. The system may detect the second identification code and provide visual, haptic, or audible feedback that the first and second components have been successfully connected and, in some examples, correctly (or incorrectly) connected.

In some examples, 3D-printed devices and components may include 3D-printed metal trace lines (e.g., conductors and antennas) that form, at least portions, of the RFID tags or RFID tag portions on first and second components of a 3D-printed device. In some examples, a main component with an RFID reader or antenna connected to an RFID reader may monitor and facilitate assembly and connection of additional components. The main component may, for example, track and verify the connection of a first component and any number of subsequent connections.

As a specific example, a male end of a cable may have a first 3D-printed RFID tag portion, and a female end of a cable or port may have a second 3D-printed RFID tag portion. A combined RFID tag is formed by the combination of the first 3D-printed RFID tag portion and the second 3D-printed RFID tag portion when the male end of the cable is connected to the female end of a cable or port. The RFID reader, which may include a 3D-printed antenna, may verify the correct connection of the male end of the cable with the female end of the cable or port.

Various combinations of the systems and methods described herein may be applied for use in a wide variety of applications and technology fields, such as to detect that cables are correctly connected to an electronic device, confirm that vehicle components are correctly installed during assembly, validate that fluid-carrying pipes are correctly joined together, confirm that custom-ordered components are correctly assembled, and the like.

As another specific example, a bowl may be too large to 3D print as a single part and so the bowl may be split into multiple portions (e.g., two halves or top, bottom, and middle portions), which can be 3D printed separately and subsequently connected. If the portions are not correctly connected, the bowl may leak or fall apart. According to the systems and methods described herein, a first portion of the bowl may be 3D printed with a first embedded RFID tag portion, and a second portion of the bowl may be 3D printed with a second embedded RFID tag portion. Only when the two portions of the bowl are correctly connected do the first and second RFID tag portions form a combined RFID tag that is readable by an RFID reader. Accordingly, an RFID reader can verify the correct assembly of the bowl portions and confirm that the bowl is acceptable for use.

In some examples, multiple bowls may be 3D printed and assembled. The combined RFID tag formed by the correct assembly of each bowl may transmit a unique identification code. Accordingly, an RFID reader may query a shipment of bowls and verify that all the bows are all correctly assembled and/or identify those that are incorrectly assembled. In some examples, each combined RFID tag may be associated with a particular product serial number or factory location.

In some examples, the RFID-based systems and methods described herein can be used by an auditing system to verify that components of a system are correctly assembled and connected. An RFID reader may verify that the various components of a system are connected to one another based on an expected set of RFID signals being received from 3D-printed RFID tags formed or enabled by the connected system.

In some cases, well-known features, structures, or operations are not shown or described in detail. Furthermore, the described features, structures, or operations may be combined in any suitable manner in various examples. It will also be readily understood that the components of the examples as generally described and illustrated in the figures herein could be arranged and designed in a wide variety of different configurations.

In some examples, a system may be formed by joining more than two parts together. For instance, an antenna's length may be extended with each successively connected part, such that an RFID reader may transmit a query signal at different wavelengths to determine how many of the parts are connected together. Different antenna lengths may respond to different wavelengths at varying intensities. Accordingly, The RFID reader may confirm that a target number of parts are connected by detecting the RFID tag formed by the target number of parts forming an antenna with an expected length (and associated frequency response).

In other examples, the systems and methods described herein may be utilized to facilitate system servicing or maintenance. For example, a technician may be apprised of which of a plurality of connections is incorrect. A system may utilize an RFID read to monitor the connections and disconnections of various system components during service or routine maintenance. The system may notify the technician if the wrong component is disconnected (or connected) or, in some examples, provide guided instructions for which component to disassemble (or assemble) next based on the detected sequence of connections (or disconnections) of components.

Some aspects of the systems and methods described herein may be implemented as computer-executable instructions (e.g., software), electronic circuitry and components (e.g., hardware), firmware, and/or combinations thereof. As used herein, a software module or component may include computer instructions or computer-executable code located within a memory device and/or transmitted as electronic signals over a system bus, wired network, or wireless network. A software module or component may, for instance, comprise multiple physical or logical blocks of computer instructions, which may be organized as a routine, program, object, component, data structure, etc., that performs tasks or implements particular data types.

Examples may be provided as a computer program product, including a non-transitory computer and/or machine-readable medium having stored thereon instructions that may be used to program a computer or another electronic device to perform processes described herein. For example, a non-transitory computer-readable medium may store instructions that, when executed by a processor of a computer system, cause the processor to perform certain methods disclosed herein. The non-transitory computer-readable medium may include, but is not limited to, hard drives, floppy diskettes, optical disks, CD-ROMs, DVD-ROMs, ROMs, RAMs, EPROMs, EEPROMs, magnetic or optical cards, solid-state memory devices, or other types of machine-readable media suitable for storing electronic and/or processor-executable instructions.

In the various examples described herein, 3D-printing techniques encompass a wide variety of additive manufacturing approaches in which material is added until an object is formed. For example, material may be added by forming several layers of material with each layer stacked on top of the previous layer. Examples of 3D printing techniques include fused filament fabrication, resin-based stereolithography, sintering, melting, or binding powder in layers via selective laser sintering or melting, multijet fusion, metaljet fusion, or the like. Furthermore, as used herein, the concept of 3D-printing encompasses additive processes that include "pick and place" component assembly for integrating additional components, such as semiconductor components, into printed objects and parts.

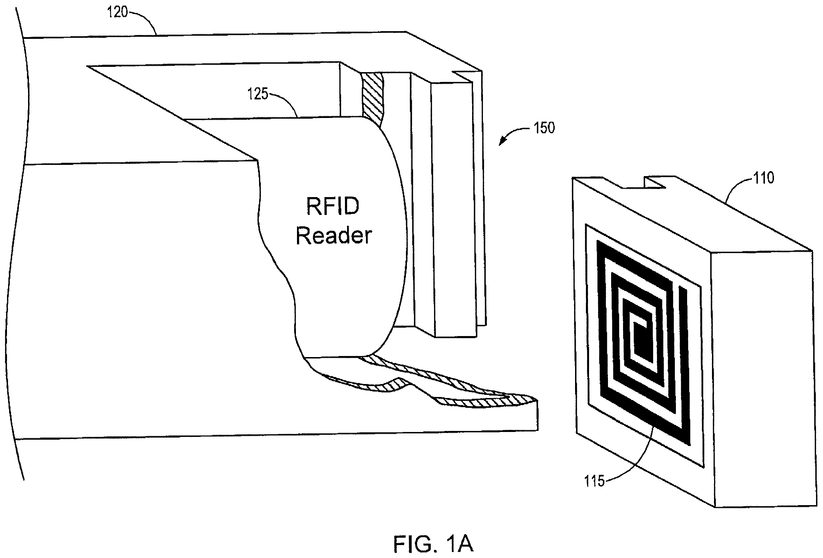

Figure 1A illustrates an example block diagram of a first 3D-printed component 110 with an RFID tag 115 to be connected to a second 3D-printed component 120 with an RFID reader 125. The example block diagram illustrates the RFID reader 125 as being proximate a connection region 150. In practice, the RFID reader may be positioned at any location within range to read the RFID tag 115 once the first 3D-printed component 110 is connected to the second 3D-printed component 120. In some examples, the RFID reader 125 may be located external to and remote from the second component 120. In other examples, as illustrated, the RFID reader 125 may be integrated with (internally located or externally affixed) to the second 3D-printed component 120. In some embodiments, one or more antennas for the RFID reader 125 may be 3D printed during the printing of the first 3D-printed component 110 and/or the second 3D-printed component 120. The RFID reader 125 can detect when the first 3D-printed component 110 is connected to the second 3D-printed component 120 at the connection region 150 by reading the RFID tag 115.

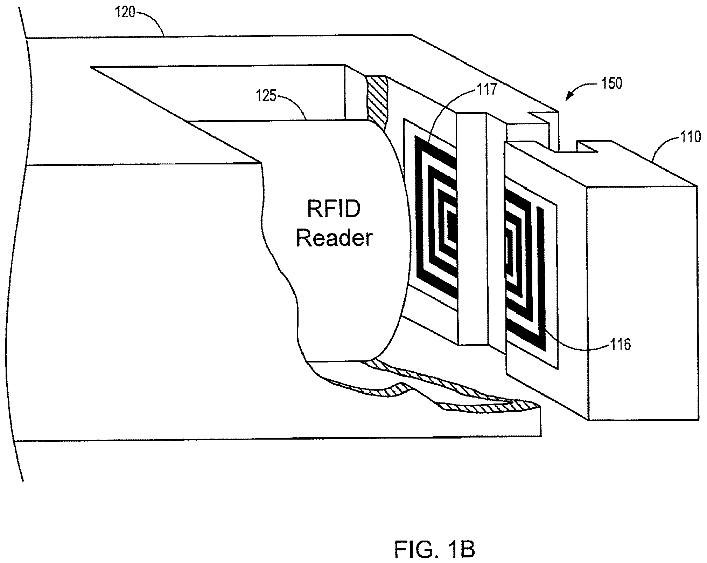

Figure 1B illustrates an example block diagram of the first 3D-printed component 110 with a first 3D-printed RFID tag portion 116 to be connected to a second 3D-printed component 120 with a second 3D-printed RFID tag portion 117 and an RFID reader device 125 integrated (e.g., 3D printed) as part of the second 3D-printed component 120. As illustrated, the first 3D-printed component 110 is adapted for connection to the second 3D-printed component 120 at a connection region 150. In some examples, neither the first 3D-printed RFID tag portion 116 nor the second 3D-printed RFID tag portion 117 may be operable to transmit any signal until they are connected (e.g., through an electrical contact connection or a non-contact electromagnetic connection). Once the first 3D-printed component 110 is connected to the second 3D-printed component 120, the first 3D-printed RFID tag portion 116 and the second 3D-printed RFID tag portion 117 connect to form a combined RFID tag operable to transmit a signal readable by the RFID reader 125.

In various examples, the RFID reader 125 may record the connection of the first 3D-printed component 110 to the second 3D-printed component 120 in a memory or database. The memory or database may be internal to the second 3D-printed component 120 or externally located. For example, the second 3D-printed component 120 may include a communication port (e.g., wired or wireless) to transmit a confirmation of the connection of the first 3D-printed component 110 to the second 3D-printed component 120 to an external database.

In some examples, the RFID reader 125 may periodically query for RFID tags to confirm the connection state of any number of connection regions. In other examples, the connection region 150 may include an electrical contact or switch that is actuated when the first 3D-printed component 110 is connected to the second 3D-printed component 120. The electrical contact or switch, when actuated, may cause the RFID reader 125 to query for RFID tags, such as the combined RFID tag created by the joining of the first 3D-printed RFID tag portion 116 and the second 3D-printed RFID tag portion 117.

In some applications, a cabinet may include a plurality of shelves. Each shelf may contain a computing device with a plurality of ports to facilitate, for example, communication and/or provide power to the computing device. As can be appreciated, the cabinet of computing devices may include a large number of ports and associated cables. In a traditional environment, a technician plugging cables into the ports of the computing device may confirm that cables are correctly plugged in by booting the computing device and verifying functionality. Utilizing the presently described systems and methods, connectors (cables and/or ports on the computing device) may include 3D-printed RFID tags and/or portions of 3D-printed RFID tags. An RFID reader may monitor the connection of cables and ports to verify that the correct 3D-printed cables are plugged into the correct 3D-printed ports.

Accordingly, the presently described systems and methods may be utilized to provide a firewall-friendly installation solution in which the technicians installing cables and computing devices may verify correct connections without accessing secure data and network activity. The RFID reader can verify the serial numbers or specific connections that are correctly made without exposing the data transported by the specific connections. In some examples, an RFID reader may be connected to a second network (e.g., a wired or wireless internet of things ("IOT") network), located on the other side of a firewall intended to protect data transmitted by the cables once they are connected. Hence, the presently described systems and methods enable remote monitoring of cable connection status by remote personnel and systems without providing access to the firewall-protected data network.

In another set of applications of the systems and methods described herein, original components of an assembly or device may be identified by integrated (e.g., 3D-printed, embedded, or affixed) RFID tags. An RFID reader may query the assembly or device to verify that the original components are installed. Unauthorized components and/or counterfeit components may not have RFID tags and/or may have RFID tags that transmit different identification signals.

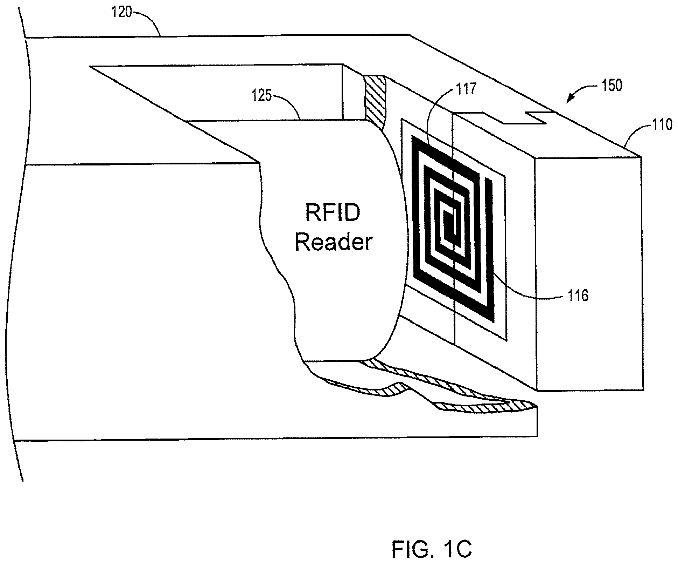

Figure 1C illustrates the example block diagram of Figure 1B with the first 3D-printed component 110 correctly connected to the second 3D-printed component 120 such that the first 3D-printed RFID tag portion 116 and the second 3D-printed RFID tag portion 117 combine to form a combined RFID tag readable by the RFID reader 125. In the illustrated example, the first 3D-printed component 110 is correctly connected to the second 3D-printed component 120 at the connection region 150.

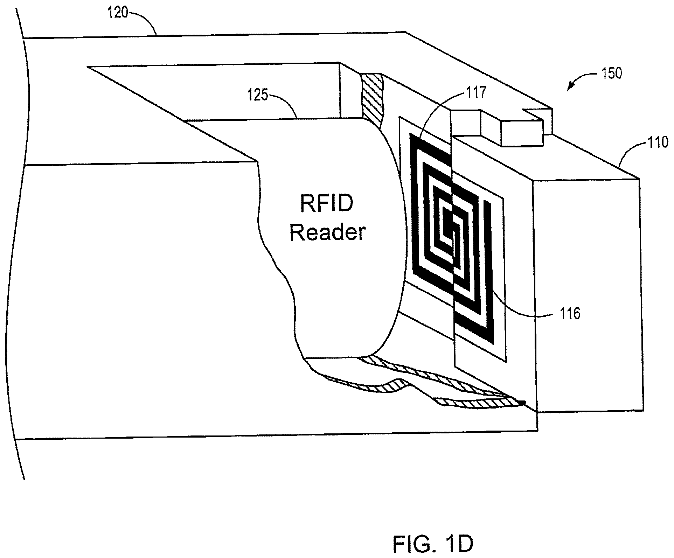

Figure 1D illustrates the example block diagram of Figure 1B with the first 3D-printed component 110 incorrectly connected to the second 3D-printed component 120, visible as a misaligned connection at the connection region 150. The combined RFID tag is not formed due to the incorrect connection of the first 3D-printed RFID tag portion 116 and the second 3D-printed RFID tag portion 117. In some examples, the RFID reader 125 may periodically query for RFID tags and fail to detect the expected combined RFID tag that would have been formed by the first 3D-printed RFID tag portion 116 and the second 3D-printed RFID tag portion 117 if the connection had been correctly made.

In some examples, the incorrect connection of the first 3D-printed component 110 to the second 3D-printed component 120 may trigger a contact or switch proximate the connection region 150. The RFID reader 125 may query for RFID tags in response to the triggering of the electrical contact or switch. If the system fails to detect an RFID tag, the system may transmit an alert (e.g., visual, haptic, or audible) that the connection is incorrect.

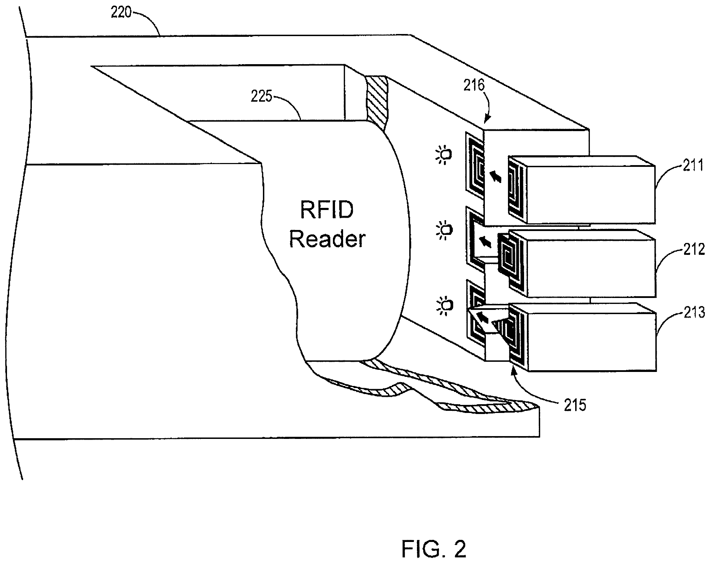

Figure 2 illustrates an example block diagram of a 3D-printed main component 220 with an integrated RFID reader 225 (e.g., including 3D-printed antenna portions) and multiple 3D-printed components 211, 212, and 213 that each includes at least a portion of a 3D-printed RFID tag 215 configured to be mated with a corresponding 3D-printed RFID tag portion 216 on the 3D-printed main component 220. The RFID reader 225 of the 3D-printed main component 220 may detect the concurrent or sequential connection of each of the 3D-printed components 211, 212, and 213 to the 3D-printed main component 220. As each 3D-printed component 211, 212, and 213 is connected to the 3D-printed main component 220, unique combined RFID tags are formed by the 3D-printed RFID tags 215 and 216.

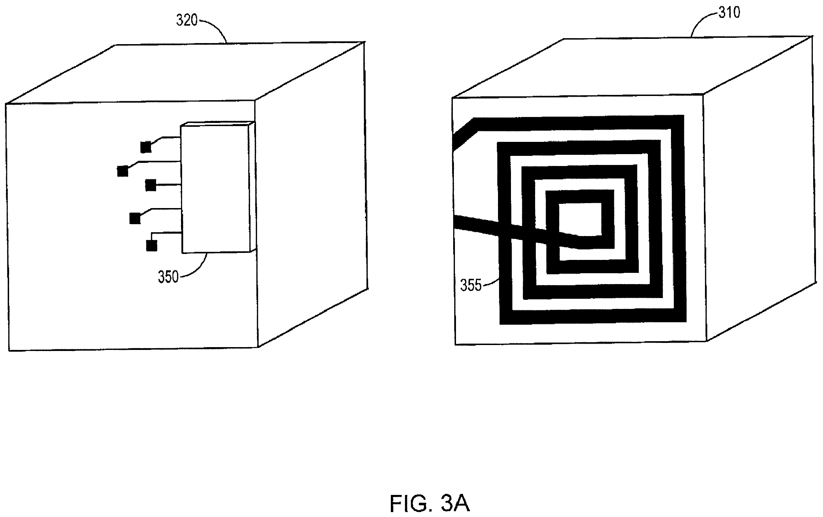

Figure 3A illustrates an example block diagram of a first 3D-printed component 320 with an integrated circuit RFID tag portion 350 and a second 3D-printed component 310 with a 3D-printed antenna RFID tag portion 355. In a disconnected state, neither of the individual RFID tag portions 350 and 355 are operable to transmit a signal. An RFID reader will fail to detect a signal from an RFID tag while the first and second 3D-printed components 310 and 320 are in the disconnected state.

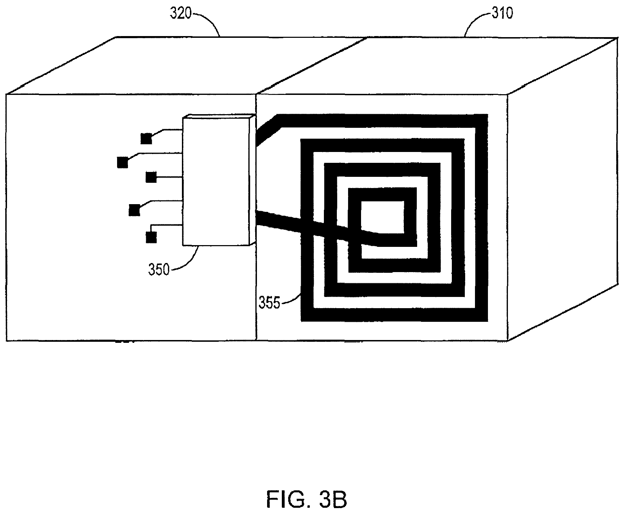

Figure 3B illustrates the block diagram of Figure 3A with the first and second 3D-printed components 310 and 320 connected to form a combined RFID tag with an electrical connection between the integrated circuit RFID tag portion 350 and the 3D-printed antenna RFID tag portion 355.

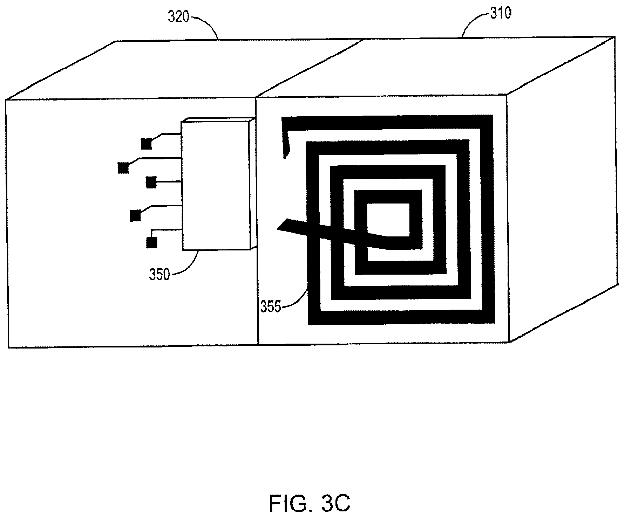

Figure 3C illustrates the block diagram of Figure 3A with the first and second 3D-printed components 310 and 320 connected to form a combined RFID tag with a non-contact connection between the integrated circuit RFID tag portion 350 and the 3D-printed antenna RFID tag portion 355. For example, a small internal antenna of the integrated circuit RFID tag portion 350 may electromagnetically connect to or resonate with the 3D-printed antenna RFID tag portion 355 when it is within a threshold range of the integrated circuit RFID tag portion 350 (e.g., when the first 3D-printed component 320 is connected with the second 3D-printed component 310).

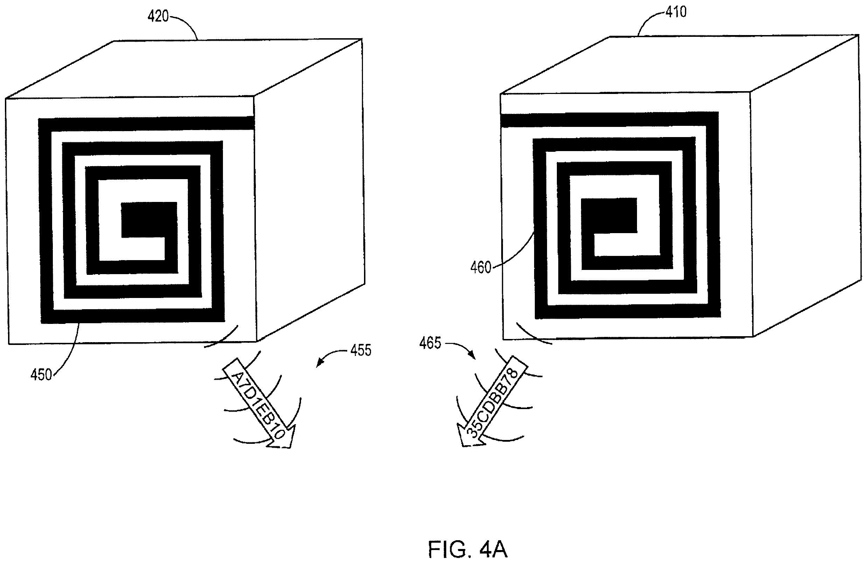

Figure 4A illustrates a block diagram of a first 3D-printed component 410 with a first 3D-printed RFID tag portion 460 that, by itself, transmits a first identification code 465, and a second 3D-printed component 420 with a second 3D-printed RFID tag portion 450 that, by itself transmits a second identification code 455. Accordingly, with the first 3D-printed component 410 and the second component 420 in a disconnected state, an RFID reader detects each of the first identification code 465 and the second identification code 455 individually.

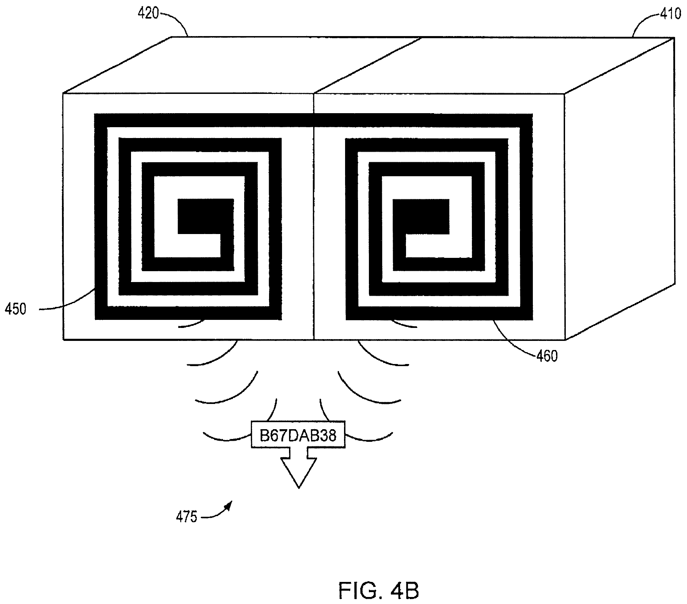

Figure 4B illustrates a block diagram the first and second 3D-printed components 410 and 420 connected such that the first and second 3D-printed RFID tag portions 450 and 460 form a combined RFID tag that transmits a third identification code 475 that is different than the first identification code (465, Figure 4A) and the second identification code (455, Figure 4A). Thus, in the connected state, the RFID reader detects the third identification code 475 and thereby validates that the first 3D-printed component 410 and the second 3D-printed component 420 are in a connected state.

In such examples, the first RFID tag portion 450 and the second RFID tag portion 460 may each include an integrated circuit component that, by themselves, transmit a unique identification code (455 and 465, in Figure 4A) via the respective antenna portions. When the first RFID tag portion 450 and the second RFID tag portion 460 are combined to form the combined RFID tag, the respective integrated circuit components detect the combined antenna portions based on a change in impedance in the connected antenna portions. The impedance value associated with the combined RFID tag causes one or both of the integrated circuits to cause the third identification code 475 to be transmitted. In some examples, one or both of the integrated circuit portions may detect that the combined RFID tag is formed based on a detected change in resonance, a change in received power level from a querying RFID reader, communication between the integrated circuits, a change in capacitance, a change in inductance, a change in resistance, or the like.

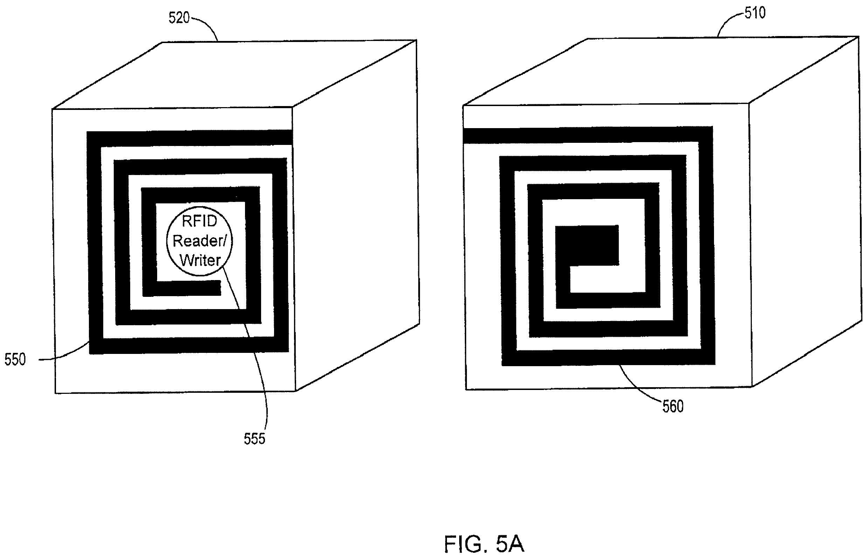

Figure 5A illustrates a block diagram of first 3D-printed component 510 with a first 3D-printed RFID tag portion 560 that comprises a writable RFID tag. A second 3D-printed component 520 includes a second 3D-printed RFID tag portion 550 and an integrated RFID reader/writer 555. Each of the first, writable RFID tag portion 560 and the second, RFID tag portion 550 may be fully operational as an RFID tag in the disconnected state.

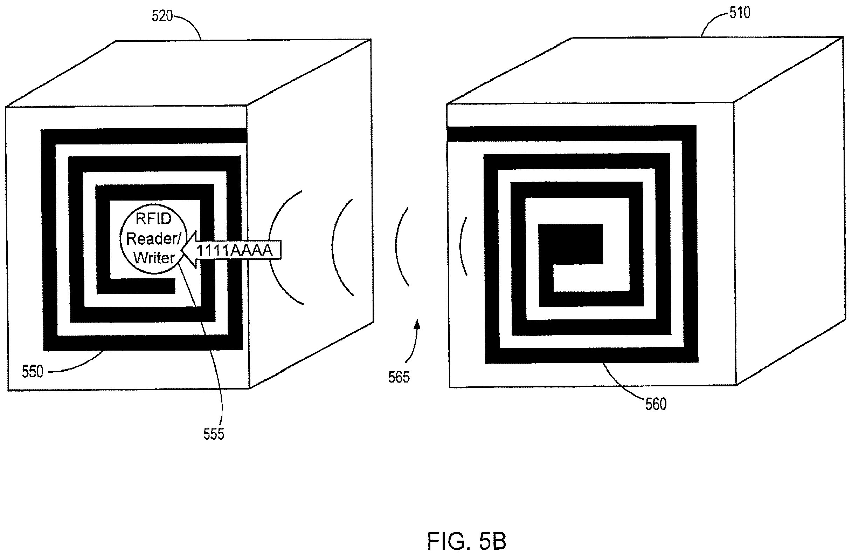

Figure 5B illustrates the block diagram of Figure 5A with the RFID reader/writer 555 reading a first identification code 565 of the first, writable RFID tag portion 560 of the first component 510 in the disconnected state.

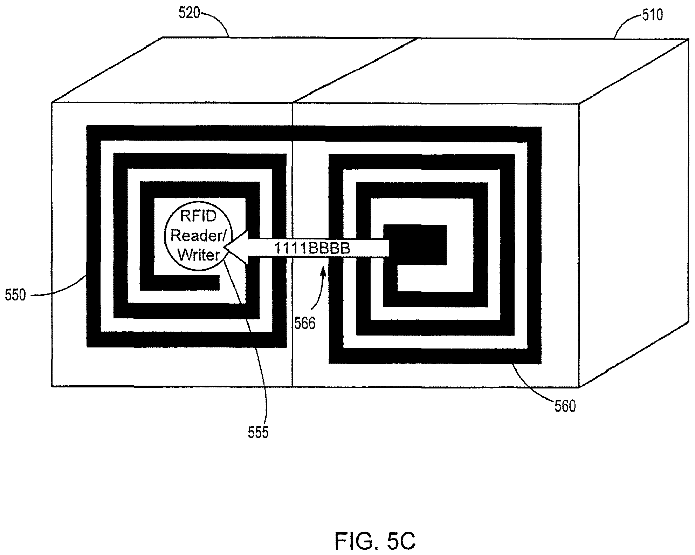

Figure 5C illustrates the block diagram of Figure 5A with the RFID reader/writer 555 reading a second identification code 566 of the first, writable RFID tag portion 560 of the first component 510 in a connected state.

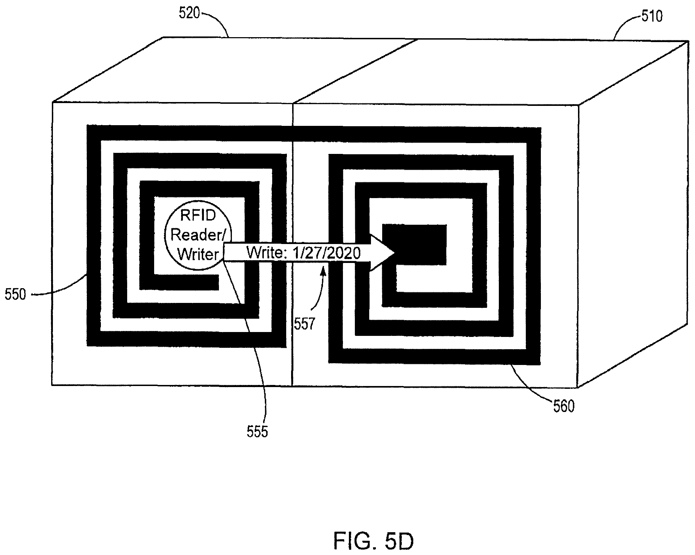

Figure 5D illustrates the block diagram of Figure 5A with the RFID reader/writer 555 writing assembly information 557 to the first, writable RFID tag portion 560 of the first component 510. For example, the RFID reader/writer 555 may write assembly information to the first, writable RFID tag portion 560 that indicates that the first and second components 510 and 520 were once connected, identifies a date the first and second components 510 and 520 were connected, specifies a location (e.g., coordinates) where the first and second components 510 and 520 were connected, and/or identifies an entity (e.g., a user, machine, facility, etc.) that connected the first and second components 510 and 520. An RFID reader (such as the RFID reader/writer 555 or a different RFID reader) may detect that the first and second components 510 and 520 are currently connected and/or read the assembly information to detect that the first and second components 510 and 520 were once connected and/or obtain other assembly information.

Accordingly, the first, writable RFID tag portion 560 transmits a first identification code while the first component is disconnected from the second component (Figure 5B) and a different identification code while the first component is connected to the second component (Figure 5C). Moreover, since the RFID reader/writer 555 writes assembly information to the first, writable RFID tag portion 560 once the first component 510 is connected to the second component 520, an RFID reader is able to scan the first, writable RFID tag portion 560 and determine whether the first component 510 is currently connected or disconnected from the second component 520 and, if the first component 510 is currently disconnected, whether the first component 510 has ever been connected to the second component 520.

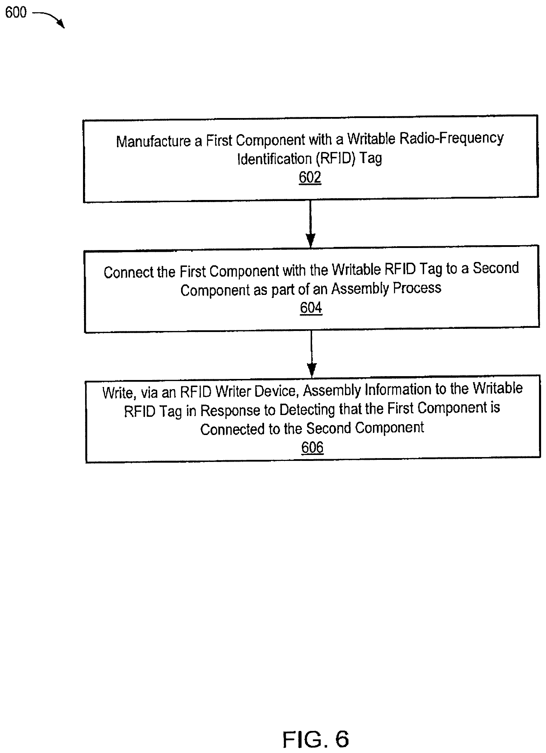

Figure 6 illustrates a flow chart of a method 600 to detect that the first component is connected to the second component. As illustrated, a first component may be manufactured, at 602, with an integrated writable RFID tag. For example, a writable RFID tag may be embedded within or affixed to a 3D-printed part. In some examples, a writable RFID tag or at least an antenna portion thereof may itself be 3D-printed. The first component may be connected, at 604, to a second component as part of an assembly process. An RFID writer device (e.g., an RFID reader/writer or a stand-alone writing device) may write, at 606, assembly information to the writeable RFID tag in response to detecting that the first component is connected to the second component.

The assembly information may, for example, include any combination of a date the first and second components were connected, identification of a location where the first and second components were connected, and identification of an entity that connected the first and second components. Prior to having the assembly information written to the writable RFID tag, the writable RFID tag may be configured to transmit a first identification signal with the first component disconnected from the second component and transmit a second identification signal with the first component connected to the second component.

Once the assembly information is written to the writable RFID tag portion, the writable RFID tag portion may transmit the assembly information in addition to the first and second identification signals based on the connection state. Accordingly, the system may verify, via an RFID reader, that the first and second components are currently disconnected based on receiving the first identification signal, but that the first and second components have been connected in the past (i.e., previously connected) based on received assembly information.

In other examples, once the assembly information is written to the writable RFID tag portion, the writable RFID tag portion may transmit the assembly information instead of the first and second identification signals regardless of the connection state.

While specific examples and applications of the systems and methods described herein are illustrated and described in detail, the disclosure is not limited to the precise configurations and components as described. Many changes may be made to the details of the above-described examples without departing from the underlying principles of this disclosure. The scope of the present disclosure should, therefore, be understood to encompass at least the following claims.

## Claims

1. A system, comprising:
a first 3D-printed component comprising a first radio-frequency identification (RFID) tag portion;
a second 3D-printed component comprising a second 3D-printed RFID tag portion arranged such that when the first 3D-printed component is connected to the second 3D-printed component, the first 3D-printed RFID tag portion and second 3D-printed RFID tag portion combine to form a combined RFID tag; and
an RFID reader to read the combined RFID tag to detect that the first component is connected to the second component.

2. The system of claim 1, wherein the first RFID tag portion comprises an integrated circuit and the second RFID tag portion comprises a 3D-printed antenna.

3. The system of claim 1, wherein the first RFID tag portion is operable to transmit a first identification code when read by the RFID reader,
wherein the second RFID tag portion is operable to transmit a second identification code, and
wherein, with the first 3D-printed component connected to the second 3D-printed component, the combined RFID tag is operable to transmit a third identification code.

4. The system of claim 1, wherein the first RFID tag portion is operable to transmit a signal at a first signal level, and
wherein the combined RFID tag is operable to transmit the signal at a second signal level that is stronger than the first signal level.

5. The system of claim 1, wherein the combined RFID tag is formed when the first 3D-printed component and at least the second 3D-printed component are correctly connected, and wherein the combined RFID tag is not formed when the first 3D-printed component and at least the second 3D-printed component are not correctly connected.

6. The system of claim 1, further comprising:
an electronic indicator in communication with the RFID reader to indicate that the first 3D-printed component is connected to at least the second 3D-printed component based on the RFID reader detecting the combined RFID tag.

7. A three-dimensional (3D) device, comprising:
a first 3D-printed part; and
a second 3D-printed part with a radio-frequency identification (RFID) tag, wherein the RFID tag is unreadable when the first 3D-printed part is disconnected from the second 3D-printed part and readable when the first 3D-printed part is connected to the second 3D-printed part.

8. The 3D device of claim 7, further comprising:
an RFID reader to read the RFID tag of at least the second 3D-printed part to detect a connection of the first and at least the second 3D-printed parts.

9. The 3D device of claim 7, wherein the first 3D-printed part comprises an antenna, and wherein the RFID tag of the second 3D-printed part is readable when the first 3D-printed part is connected to the second 3D-printed part by using the antenna of the first 3D-printed part.

10. The 3D device of claim 9, wherein, with the first and second 3D-printed parts connected, the antenna of the first 3D-printed part is positioned in non-contact proximity with the RFID tag of the second 3D-printed part.

11. A method, comprising:
3D-printing a first component with a writable radio-frequency identification (RFID) tag, wherein at least an antenna portion of the writable RFID tag is 3D-printed;
connecting the first 3D-printed component with the writable RFID tag to a second 3D-printed component as part of an assembly process; and
writing, via an RFID writer device, assembly information to the writable RFID tag in response to detecting that the first 3D-printed component is connected to the second 3D-printed component.

12. The method of claim 11, wherein the assembly information comprises at least one of: a date the first and second 3D-printed components were connected, identification of a location where the first and second 3D-printed components were connected, and identification of an entity that connected the first and second 3D-printed components.

13. The method of claim 11, wherein the writable RFID tag is configured to:
transmit a first identification signal with the first 3D-printed component disconnected from the second 3D-printed component, and
transmit a second identification signal with the first 3D-printed component connected to the second 3D-printed component.

14. The method of claim 13, further comprising:
verifying, via an RFID reader, that the first and second 3D-printed components are connected based on receiving the first identification signal from the writable RFID tag.

15. The method of claim 14, wherein the assembly information indicates that the first and second 3D-printed components have been connected, and wherein the method further comprises:
verifying, via the RFID reader, that the first and second 3D-printed components are currently disconnected based on receiving the first identification signal, but that the first and second 3D-printed components have been previously connected based on received assembly information.
